# EUROPÄISCHE PATENTSCHRIFT

(11) **EP 2 209 585 B1**
(45) Veröffentlichungstag und Bekanntmachung des Hinweises auf die Patenterteilung: **20.03.2013**
(21) Anmeldenummer: 08842505.3
(22) Anmeldetag: 14.10.2008
(51) Int. Cl.: B23K 26/38, B23K 26/40, F24C 15/10, H05B 3/74

(54) **PLATTE AUS GLAS ODER KERAMIK MIT EINER AUSNEHMUNG ZUR BEFESTIGUNG EINES TRAGBAUTEILS UND VERFAHREN ZUM HERSTELLEN EINER SOLCHEN PLATTE DURCH LASERBEARBEITUNG**
PLATE MADE OF GLASS OR CERAMIC HAVING A RECESS FOR MOUNTING A CARRIER COMPONENT, AND METHOD FOR PRODUCING SUCH A PLATE BY LASER MACHINING
PLAQUE EN VERRE OU EN CÉRAMIQUE PRÉSENTANT UN ÉVIDEMENT POUR LE MONTAGE D'UN COMPOSANT SUPPORT, ET PROCÉDÉ DE PRODUCTION D'UNE TELLE PLAQUE PAR USINAGE AU LASER

(30) Priorität: 22.10.2007 ES 200702863
(43) Veröffentlichungstag der Anmeldung: 28.07.2010
(73) Patentinhaber: BSH Bosch und Siemens Hausgeräte GmbH, 81739 München (DE)
(72) Erfinder: GARCIA JIMÉNEZ, Jose Ramon, E-50009 Zaragoza (ES); BUÑUEL MAGDALENA, Miguel Angel, E-50017 Zaragoza (ES); CEAMANOS GAYA, Jesús, E-50015 Zaragoza (ES); DELGADO ALGUACIL, José David, E-50018 Zaragoza (ES); GÓMEZ ORTIZ, Sergio, E-50012 Zaragoza (ES); PEÑA TORRE, José Ignacio, E-50004 Zaragoza (ES); ROMAN BASOLS, Carlos, E-50012 Zaragoza (ES); SCHMALENSTROT, Rene, E-50010 Zaragoza (ES); SOLA MARTINEZ, Daniel, E-50015 Zaragoza (ES)
(86) Internationale Anmeldenummer: PCT/EP2008/063772
(87) Internationale Veröffentlichungsnummer: WO 2009/053271

(56) Entgegenhaltungen:
- EP-A- 1 464 436
- DE-A1- 4 320 895
- DE-C1- 19 960 495
- JP-A- 2003 223 970
- JP-A- 2004 296 532
- US-A- 6 150 636
- US-A1- 2006 051 045

## Beschreibung

Die Erfindung betrifft ein Platte aus Glas oder Glaskeramik nach dem Oberbegriff des Anspruchs 1 und ein Verfahren zum Herstellen einer Platte nach dem Oberbegriff des Anspruchs ID sicht 2.3. JP 2004/296532.

Aus dem Stand der Technik ist es bekannt, einen Temperatursensor in ein Bohrloch an einer Unterseite der Abdeckplatte eines Induktionskochfelds einzulassen. Das Bohrloch wird durch spanende Verfahren wie Sandstrahl, Wasserstrahl oder Bohrverfahren mit Diamantbohrköpfen in das Material der Abdeckplatte eingebracht.

Der Erfindung liegt insbesondere die Aufgabe zugrunde, eine gattungsgemäße Platte und ein Verfahren zum Herstellen einer Platte bereitzustellen, das einen besonders robusten Halt eines Tragbauteils in einer Ausnehmung der Platte erlaubt.

Einer Platte aus Glas oder Keramik gemäβ der Erfindung ist in Anspruch 1 definiert.

Ein Verfahren gemäβ der Erfindung ist im Anspruch 10 definiert.

Es wird vorgeschlagen, dass die Ausnehmung zumindest teilweise durch Laserbearbeitung in das Material der Platte eingearbeitet ist. Die Laserbearbeitung hat im Vergleich zu konventionellen spanenden Verfahren wie Sandstrahlen, Wasserstrahlbearbeitung oder Bearbeitung mit diamantbesetzten Schneidwerkzeugen den Vorteil, dass das die Ausnehmung umgebende Material weitestgehend unbeeinträchtigt bleibt und mikroskopische Risse in diesem Material, die zu einer Destabilisierung der Platte bzw. der Befestigung des Tragbauteils führen würden, vermieden werden können.

Insbesondere bei Glas- oder Glaskeramikabdeckplatten kann eine Ausnehmung mit einer glatten Oberfläche geschaffen werden, da das Glasmaterial die Innenwände der Ausnehmung nach der Laserbearbeitung glasurartig bedecken kann.

Die erfindungsgemäße Platte bzw. ein erfindungsgemäßes Kochfeld kann eine Platte, beispielsweise aus keramischen Gläsern, wie beispielsweise die von der Firma Schott unter dem Handelsnamen "Suprema" oder "Cleartrans" vertriebenen Keramikgläser, umfassen. Ferner können Hartgläser, vorgespannte Gläser, Keramiken wie Cordierit, Verbindungen von Silikatglas mit Kevlarfasern, Siliciumcarbid, Bornitrid oder ähnlichem verwendet werden. Verwendbare Materialien müssen insbesondere eine gute thermische Schockbeständigkeit, also eine geringe thermische Ausdehnungsrate und eine geringe wärmebeeinflusste Zonenbildung nach der Laserbearbeitung zeigen.

Als Tragbauteil soll in diesem Zusammenhang ein Bauteil bezeichnet werden, das zum Tragen weiterer Bauteile ausgelegt und vorgesehen ist, insbesondere zum Tragen eines Gehäuses und/oder zum Tragen von Heizelementen und/oder Elektronikbauteilen in einem Kochfeld.

Da die bekannten Verfahren, Tragbauteile mit der Unterseite einer gattungsgemäßen Platte zu verkleben, aufgrund der erforderlichen Temperaturbeständigkeit der Klebverbindung sehr aufwändig und kostenintensiv sind, können durch die Verwendung einer erfindungsgemäßen Ausnehmung zur Befestigung des Tragbauteils klare Kosteneinsparungspotentiale eröffnet werden. Insbesondere kann durch die vorteilhafte Oberflächenstruktur ein fester Halt von in die Ausnehmung eingeklebten Tragbauteilen erreicht werden oder eine kraft- oder formschlüssige Verbindung hergestellt werden, die ein Verkleben des Tragbauteils verzichtbar macht.

Insbesondere dann, wenn die Ausnehmung zum formschlüssigen Halten des Tragbauteils ausgelegt ist, kann in einer kostengünstigen Weise eine robuste und temperaturbeständige Verbindung zwischen dem Tragbauteil und der Unterseite der Platte hergestellt werden.

Ferner wird vorgeschlagen, dass.zumindest.eine. Normale. d.h. senkrechte Gerade zur Innenwand der Ausnehmung in zumindest einem Teilbereich einen stumpfen Winkel zu einer Normalen zu der Unterseite der Platte aufweist. Dadurch kann eine von dem Tragbauteil auf die Unterseite ausgeübte Zugkraft in dem Teilbereich abgestützt werden. Das Tragbauteil kann beispielsweise ein Träger oder als ein Gehäuseteil eines unter der Platte angeordneten Gehäuses zur Aufnahme von Heizelementen des Kochfelds sein.

Die Vorteile der Erfindung kommen insbesondere dann zum Tragen, wenn die Ausnehmung in einem Randbereich der Unterseite der Platte angeordnet ist und zur Befestigung eines als Montageraum ausgebildeten Tragbauteils ausgelegt ist. Die Ausnehmung kann dabei insbesondere ein Element aus einer Reihe von über den Umfang der Unterseite verteilten Ausnehmungen im Randbereich der Unterseite sein. Auf jeder Seite von vier Seiten der Unterseite können beispielsweise zwei oder drei gleichartige Ausnehmungen vorgesehen sein.

Wenn die Ausnehmung einen ersten, sich senkrecht zur Unterseite erstreckenden Bereich und einen zweiten, sich im Wesentlichen parallel zur Unterseite der Platte erstreckenden Bereich aufweist, kann das Tragbauteil in die Platte eingehakt werden. Der erste Bereich kann beispielsweise mit einem konventionellen, spanabtragenden Verfahren in die Unterseite der Platte eingearbeitet sein und der zweite Bereich mit dem Laserbearbeitungsverfahren.

Die Verwendung einer solchen Platte als Abdeckplatte in einem Kochfeld ist wegen der guten Reinigungseigenschaften der Oberseite besonders vorteilhaft. Es kann eine spalt-und kantenfreie Oberseite geschaffen werden, ohne sich allein auf eine vergleichsweise temperaturempfindliche Klebeverbindung der Unterseite verlassen zu müssen.

Die Ausnehmung kann beispielsweise in einem senkrecht zu der Unterseite der Platte verlaufenden Schnitt ein L-förmiges oder T-förmiges Profil aufweisen.

Ferner betrifft die Erfindung ein Verfahren zum Herstellen einer Platte der oben genannten Art, insbesondere einer Abdeckplatte für ein Kochfeld, wobei eine Ausnehmung in eine Unterseite der Platte eingearbeitet wird.

Es wird vorgeschlagen, dass die Ausnehmung zumindest teilweise durch ein Laserbearbeitungsverfahren in die Unterseite eingearbeitet wird. Die Verwendung des Laserbearbeitungsverfahrens erlaubt eine besondere Flexibilität in der Formwahl der Ausnehmung und gleichzeitig eine sehr präzise Bearbeitung des Materials. Dadurch können Kosten in der Herstellung eingespart werden und es kann eine größere Flexibilität im Design erreicht werden.

Eine solide Verbindung zwischen dem Tragbauteil und der Platte kann insbesondere dadurch hergestellt werden, dass die Ausnehmung derart geformt wird, dass die Platte und das Tragbauteil in der Richtung einer Normalen zur Unterseite der Platte formschlüssig miteinander verbunden werden können.

Kosteneinsparungspotentiale können erschlossen werden, wenn das Verfahren einen ersten Bearbeitungsschritt mit einem konventionellen spanabtragenden Verfahren und einen zweiten Bearbeitungsschritt, der eine Nachbearbeitung mit dem Laser umfasst, enthält.

Beliebige Formen der Ausnehmungen, insbesondere mit sich in die Tiefe der Ausnehmungen weitendem Durchmesser können erreicht werden, wenn in dem zweiten Bearbeitungsschritt ein Mittel zum Umlenken des Laserstrahls in das Sackloch eingeführt wird. Das Mittel kann beispielsweise ein kleiner galvanischer Spiegel sein oder alternativ ein flexibler Lichtleiter.

Weitere Vorteile und kennzeichnende Merkmale der Erfindung ergeben sich aus der folgenden Figurenbeschreibung. Die Figurenbeschreibung, die Zeichnungen und die Ansprüche enthalten zahlreiche Merkmale in einer Kombination, die lediglich ein Ausführungsbeispiel der Erfindung darstellt. Der Fachmann wird erkennen, dass auch weitere Teilkombinationen der dargestellten und beschriebenen Merkmale zur Ausnutzung des in den Patentansprüchen beschriebenen Erfindungsgedankens verwendbar sind.

Dabei zeigen:
- Fig. 1: ein Kochfeld mit einer Abdeckplatte und einen an einer Unterseite der Platte befestigten Montagerahmen,
- Fig. 2: einen Vertikalschnitt der Platte und des Montagerahmens aus Fig. 1 in einer schematischen Darstellung,
- Fig. 3: ein erfindungsgemäßes Tragbauteil zur Befestigung an einer Platte eines Kochfelds,
- Fig. 4: einen ersten Schritt eines Verfahrens zur Herstellung eines Kochfelds und
- Fig. 5: einen zweiten Schritt eines Verfahrens zur Herstellung eines Kochfelds.

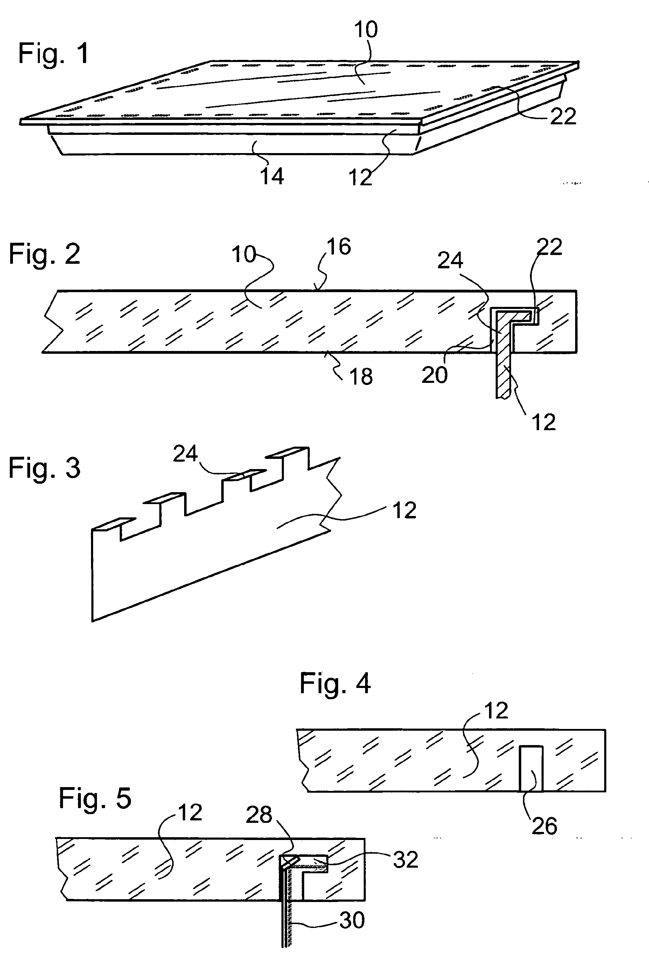

Figur 1 zeigt schematisch ein Kochfeld mit einer als Abdeckplatte ausgebildeten Platte 10 und einem Montagerahmen 12. Das Kochfeld ist zum Einbau in einer Arbeitsplatte (nicht dargestellt) vorgesehen, wobei der Montagerahmen 12 und ein an dem Montagerahmen 12 befestigtes Gehäuse 14, welches Heizelemente zum Betreiben des Kochfelds enthält, in eine Öffnung in der Arbeitsplatte eingelassen werden. Die Platte 10 ist in dem in Figur 1 dargestellten Ausführungsbeispiel aus Glaskeramik ausgebildet und umfasst eine Oberseite 16 zum Aufstellen von Kochgeschirr und eine der Oberseite 16 gegenüber liegende Unterseite 18. In die Unterseite 18 sind in einem Randbereich der Platte 10 über den gesamten Umfang der Platte 10 in Abständen von einigen Zentimetern Ausnehmungen 20 zur Befestigung des als Montagerahmen ausgebildeten Tragbauteils 12 eingearbeitet.

Figur 2 zeigt einen Ausschnitt der Platte 10 im Bereich einer der Ausnehmungen 20 in einem Vertikalschnitt. Die Ausnehmung 20 ist zum formschlüssigen Halten des Tragbauteils 12 ausgelegt und hat ein in dem senkrecht zur Unterseite 18 der Platte 10 verlaufenden Schnitt L-förmiges Profil, so dass eine parallel zu der Unterseite 18 verlaufende Flanke des Profils einen Teilbereich 22 bildet, in welchem eine Normale zur Innenwand der Ausnehmung 20 einen stumpfen Winkel von ungefähr 180° zu einer Normalen zu der Unterseite 18 der Platte 10 aufweist. Damit ist im Inneren der Ausnehmung eine Hinterschneidung eingearbeitet.

Die Ausnehmung 20 ist gemäβ der Erfindung als Sackloch ausgebildet und ein Durchmesser in dem ersten Teilbereich 22, der einen in Figur 1 horizontalen Schenkel des L-förmigen Profils bildet, größer ist als ein zweiter Durchmesser in dem zweiten Bereich, der einen vertikalen Schenkel des L-förmigen Profils bildet und der zwischen dem ersten Bereich und der Unterseite 18 der Platte 10 liegt.

Das Tragbauteil 12, also der Montagerahmen, hat einen L-förmigen Fortsatz 24, der in die Ausnehmung 20 in der Unterseite 18 der Platte 10 eingehakt werden kann und so eine formschlüssige Verbindung zwischen der Platte 10 und dem Tragbauteil 12 in der in Figur 2 vertikalen Richtung senkrecht zu der Unterseite 18 der Platte 10 herstellt.

Figur 3 zeigt ein Tragbauteil 12 mit drei Fortsätzen 24, die zum Eingreifen in die Ausnehmungen 20 in der Platte 10 vorgesehen sind. Die rechtwinklig abgeknickten Endbereiche der Fortsätze 24 sind alternierend in unterschiedliche Richtungen abgewinkelt, so dass das Tragbauteil 12 zum Einhaken der Endbereiche in die Ausnehmungen 20, die ebenfalls in unterschiedliche Richtungen abgewinkelt sind, leicht gebogen werden muss. Nach der Montage des Gehäuses 14 an den Montagerahmen 12 ist ein solches Verbiegen nicht mehr möglich, so dass ein sicherer Halt des Gehäuses 14 an der Platte 10 durch den Montagerahmen 12 und die Ausnehmungen 20 in der Unterseite 18 der Platte 10 vermittelt wird.

Die erfindungsgemäße Verbindung des Tragbauteils mit der Platte 10 kann neben dem Montagerahmen 12 auch für andere Tragbauteile, beispielsweise für Sensoren oder dergleichen, verwendet werden. Ferner ist der Erfindungsgedanke sowohl auf Induktionskochfelder als auch auf Kochfelder mit Strahlungsheizkörpern oder anderen Technologien anwendbar. Generell ist der Erfindungsgedanke auch im Zusammenhang mit anderen Hausgeräten anwendbar, in welchen ein Tragbauteil, beispielsweise ein Metall-Tragbauteil, mit einer Platte 10 aus Glas, Glaskeramik oder Keramik verbunden werden muss.

Die Figuren 4 und 5 zeigen schematisch ein Verfahren zum Herstellen eines erfindungsgemäßen Kochfelds, und zwar insbesondere die das Einarbeiten der Ausnehmung 20 in die Unterseite 18 der Platte 10 betreffenden Verfahrensschritte.

Zunächst wird in einem herkömmlichen Materialbearbeitungsverfahren oder alternativ mit einem Laser ein Sackloch 26 mit einem rechteckigen Querschnitt in die Unterseite 18 der Platte 10 eingearbeitet. Hier kann beispielsweise ein Sandstrahlverfahren, ein Wasserstrahlverfahren oder ein Fräsverfahren mit einem diamantbesetzten Fräskopf verwendet werden.

Anschließend wird ein Mittel 28 zum Umlenken des Laserstrahls, in dem in Figur 5 dargestellten Ausführungsbeispiel ein galvanischer Spiegel, oder alternativ ein Lichtleiter in das Sackloch 26 eingeführt, so dass ein Laserstrahl 30 zur Herstellung eines sich parallel zu der Unterseite 18 der Platte 10 erstreckenden, aufgeweiteten Bereichs 32 der Ausnehmung 20 in die in Fig. 5 vertikal ausgerichtete Richtung umgelenkt werden kann.

### Bezugszeichen

- 10: Platte
- 12: Tragbauteil
- 14: Gehäuse
- 16: Oberseite
- 18: Unterseite
- 20: Ausnehmung
- 22: Teilbereich
- 24: Fortsatz
- 26: Sackloch
- 28: Mittel
- 30: Laserstrahl
- 32: Bereich

## Patentansprüche

1. Platte (10) aus Glas oder Keramik mit einem Tragbauteil (12), wobei die Platte (10) eine Oberseite (16) und eine der Oberseite (16) gegenüber liegende Unterseite (18) umfasst, wobei in die Unterseite (18) wenigstens eine Ausnehmung (20) zur Befestigung eines Tragbauteils (12) eingearbeitet ist, **dadurch gekennzeichnet dass** die Ausnehmung (20) zumindest teilweise durch Laserbearbeitung in das Material der Platte (10) eingearbeitet ist, die Ausnehmung (20) als Sackloch ausgebildet ist und ein Durchmesser in einem ersten Bereich des Sacklochs größer ist als in wenigstens einem zweiten Bereich, der zwischen dem ersten Bereich und der Unterseite (18) der Platte (10) angeordnet liegt.

2. Platte nach Anspruch 1, **dadurch gekennzeichnet, dass** die Ausnehmung (20) zum formschlüssigen Halten des Tragbauteils (12) ausgelegt ist.

3. Platte nach einem der vorhergehenden Ansprüche, **dadurch gekennzeichnet, dass** zumindest eine Normale zur Innenwand der Ausnehmung (20) in zumindest einem Teilbereich (22) einen Stumpfen Winkel zu einer Normalen zu der Unterseite (18) der Platte (10) aufweist.

4. Platte nach einem der vorhergehenden Ansprüche, **dadurch gekennzeichnet, dass** die Ausnehmung (20) in einem Randbereich der Unterseite (18) der Platte (10) angeordnet ist und zur Befestigung eines als Montagerahmen (12) ausgebildeten Tragbauteils (12) ausgelegt ist.

5. Platte nach Anspruch 4, **dadurch gekennzeichnet, dass** die Ausnehmung (20) ein Element aus einer Reihe von über den Umfang der Unterseite (18) verteilten Ausnehmungen (20) im Randbereich der Unterseite (18) ist.

6. Platte nach einem der vorhergehenden Ansprüche, **dadurch gekennzeichnet, dass** die Ausnehmung (20) einen ersten, sich im Wesentlichen parallel zur Unterseite (18) erstreckenden Bereich und einen zweiten, sich im Wesentlichen senkrecht zur Unterseite (18) der Platte (10) erstreckenden Bereich aufweist.

7. Platte nach den Ansprüchen 5 und 6, **dadurch gekennzeichnet, dass** der erste Bereich mit einem konventionellen spanenden Verfahren in die Unterseite (18) der Platte (10) eingearbeitet ist und der zweite Bereich in einem Laserbearbeitungsverfahren eingearbeitet ist.

8. Platte nach einem der vorhergehenden Ansprüche, **dadurch gekennzeichnet, dass** die Ausnehmung (20) in einem senkrecht zu der Unterseite (18) der Platte (10) verlaufenden Schnitt ein L-förmiges Profil aufweist.

9. Platte nach einem der vorhergehenden Ansprüche, **dadurch gekennzeichnet, dass** die Ausnehmung (20) in einem senkrecht zu der Unterseite (18) der Platte (10) verlaufenden Schnitt ein T-förmiges Profil aufweist.

10. Verfahren zum Herstellen einer Platte (10), insbesondere einer Abdeckplatte für ein Kochfeld, wobei eine Ausnehmung (20) zur Befestigung eines Tragbauteils (12) in eine Unterseite (18) der Platte (10) eingearbeitet wird, **dadurch gekennzeichnet dass** die Ausnehmung (20) zumindest teilweise durch ein Laserbearbeitungsverfahren in die Unterseite (18) eingearbeitet wird, die Ausnehmung (20) als Sackloch ausgebildet wird und die Ausnehmung (20) derart geformt wird, dass ein Durchmesser in einem ersten Bereich des Sacklochs größer ist als in wenigstens einem zweiten Bereich, der zwischen dem ersten Bereich und der Unterseite (18) der Platte (10) angeordnet liegt.

11. Verfahren nach Anspruch 10 **dadurch gekennzeichnet, dass** die Ausnehmung (20) derart geformt wird, dass zumindest eine Normale zur Innenwand der Ausnehmung (20) in zumindest einem Teilbereich (22) einen stumpfen Winkel zu einer Normalen zu der Unterseite (18) der Platte (10) aufweist.

12. Verfahren nach Anspruch 11, **dadurch gekennzeichnet, dass** das Verfahren einen ersten Bearbeitungsschritt umfasst, in welchem in einem konventionellen spanenden Verfahren zur Herstellung der Ausnehmung (20) ein Sackloch in die Unterseite (18) eingearbeitet wird und in einem zweiten Bearbeitungsschritt das Sackloch (26) mit einem Laser nachbearbeitet wird.

13. Verfahren nach Anspruch 12, **dadurch gekennzeichnet, dass** in dem zweiten Bearbeitungsschritt ein Mittel (28) zum Umlenken eines Laserstrahls (30) in das Sackloch (26) eingeführt wird.

## Claims

1. Plate (10) of glass or ceramic with a support component (12), wherein the plate (10) has an upper side (16) and a lower side (18) opposite the upper side (16) and wherein at least one recess (20) for fastening a support component (12) is formed in the lower side (18), **characterised in that** the recess (20) is formed in the material of the plate (10) at least partly by laser action, the recess (20) is formed as a blind bore and a diameter in a first region of the blind bore is greater than in at least one second region arranged to lie between the first region and the lower side (18) of the plate (10).

2. Plate according to claim 1, **characterised in that** the recess (20) is designed for mechanically positive retention of the support component (12).

3. Plate according to one of the preceding claims, **characterised in that** at least one normal to the inner wall of the recess (20) has in at least one sub-region (22) an obtuse angle with respect to a normal to the lower side (18) of the plate (10).

4. Plate according to any one of the preceding claims, **characterised in that** the recess (20) is arranged in an edge region of the lower side (18) of the plate (10) and is designed for fastening a support component (12) constructed as a mounting frame (12).

5. Plate according to claim 4, **characterised in that** the recess (20) is an element of a row of recesses (20), which are distributed over the circumference of the lower side (18), in the edge region of the lower side (18).

6. Plate according to any one of the preceding claims, **characterised in that** the recess (20) has a first region extending substantially parallel to the lower side (18) and a second region extending substantially perpendicularly to the lower side (18) of the plate (10).

7. Plate according to claims 5 and 6, **characterised in that** the first region is formed in the lower side (18) of the plate (10) by a conventional machining method and the second region is formed in a laser processing method.

8. Plate according to any one of the preceding claims, **characterised in that** the recess (20) has an L-shaped profile in a section extending perpendicularly to the lower side (18) of the plate (10).

9. Plate according to any one of the preceding claims, **characterised in that** the recess (20) has a T-shaped profile in a section extending perpendicularly to the lower side (18) of the plate (10).

10. Method of producing a plate (10), particularly a top plate for a cooker hob, wherein a recess (20) for fastening a support component (12) is formed in a lower side (18) of the plate (10), **characterised in that** the recess (20) is formed in the lower side (18) at least partly by a laser processing method, the recess (20) is formed as a blind bore and the recess (20) is shaped so that a diameter in a first region of a blind bore is greater than in at least one second region arranged to lie between the first region and the lower side (18) of the plate (10).

11. Method according to claim 10, **characterised in that** the recess (20) is shaped so that at least one normal to the inner wall of the recess (20) has at least in a sub-region (22) an obtuse angle with respect to a normal to the lower side (18) of the plate (10).

12. Method according to claim 11, **characterised in that** the method comprises a first processing step in which a blind bore is formed in the lower side (18) in a conventional machining method for producing the recess (20) and in a second processing step the blind bore (26) is re-processed by a laser.

13. Method according to claim 12, **characterised in that** in the second processing step a means (28) for deflecting a laser jet (30) is introduced into the blind bore (26).

## Revendications

1. Plaque (10) en verre ou en céramique comportant un composant porteur (12), la plaque (10) comprenant un côté supérieur (16) et un côté inférieur (18) opposé au côté supérieur (16), au moins un évidement (20) étant incorporé dans le côté inférieur (18) pour la fixation d'un composant porteur (12), **caractérisée en ce que** l'évidement (20) est façonné au moins en partie par un usinage au laser dans le matériau de la plaque (10), **en ce que** l'évidement est réalisé comme trou borgne et **en ce qu'**un diamètre dans une première partie du trou borgne est plus grand que dans au moins une deuxième partie qui est située en étant disposée entre la première partie et le côté inférieur (18) de la plaque (10).

2. Plaque selon la revendication 1, **caractérisée en ce que** l'évidement (20) est conçu pour le maintien par adhérence de forme du composant porteur (12).

3. Plaque selon l'une quelconque des revendications précédentes, **caractérisée en ce qu'**au moins une normale à la paroi intérieure de l'évidement (20) présente dans au moins une zone partielle (22) un angle obtus par rapport à une normale au côté inférieur (18) de la plaque (10).

4. Plaque selon l'une quelconque des revendications précédentes, **caractérisée en ce que** l'évidement (20) est disposé dans une partie de bord du côté inférieur (18) de la plaque (10) et est conçu pour la fixation d'un composant porteur (12) réalisé en tant qu'un cadre de montage (12).

5. Plaque selon la revendication 4, **caractérisée en ce que** l'évidement (20) est un élément d'une série d'évidements (20) répartis sur le pourtour du côté inférieur (18) dans la partie de bord du côté inférieur (18).

6. Plaque selon l'une quelconque des revendications précédentes, **caractérisée en ce que** l'évidement (20) présente une première partie s'étendant essentiellement parallèlement au côté inférieur (18) et une deuxième partie (18) s'étendant essentiellement perpendiculairement au côté inférieur (18) de la plaque (10).

7. Plaque selon les revendications 5 et 6, **caractérisée en ce que** la première partie est façonnée dans le côté inférieur (18) de la plaque (10) à l'aide d'un procédé conventionnel à enlèvement de copeaux et **en ce que** la deuxième partie est façonnée dans un procédé d'usinage au laser.

8. Plaque selon l'une quelconque des revendications précédentes, **caractérisée en ce que** l'évidement (20) présente un profil en forme de L dans une coupe s'étendant perpendiculairement au côté inférieur (18) de la plaque (10).

9. Plaque selon l'une quelconque des revendications précédentes, **caractérisée en ce que** l'évidement (20) présente un profil en forme de T dans une coupe s'étendant perpendiculairement au côté inférieur (18) de la plaque (10).

10. Procédé de fabrication d'une plaque (10), notamment d'une plaque de recouvrement pour un champ de cuisson, un évidement (20) étant incorporé dans un côté inférieur (18) de la plaque (10) pour la fixation d'un composant porteur (12), **caractérisé en ce que** l'évidement (20) est façonné dans le côté inférieur (18) au moins en partie au moyen d'un procédé d'usinage au laser, **en ce que** l'évidement (20) est réalisé comme trou borgne et **en ce que** l'évidement (20) est formé de telle manière qu'un diamètre dans une première partie du trou borgne est plus grand que dans au moins une deuxième partie qui est située en étant disposée entre la première partie et le côté inférieur (18) de la plaque (10).

11. Procédé selon la revendication 10, **caractérisé en ce que** l'évidement (20) est formé de telle manière qu'au moins une normale à la paroi intérieure de l'évidement (20) présente dans au moins une zone partielle (22) un angle obtus par rapport à une normale au côté inférieur (18) de la plaque (10).

12. Procédé selon la revendication 11, **caractérisé en ce que** le procédé comprend une première étape d'usinage, au cours de laquelle, dans un procédé conventionnel à enlèvement de copeaux, un trou borgne est façonné dans le côté inférieur (18) pour réaliser l'évidement (20) et, **en ce que** dans une deuxième étape de procédé, le trou borgne (26) est retouché avec un laser.

13. Procédé selon la revendication 11, **caractérisé en ce que** dans une deuxième étape d'usinage, un moyen (28) est introduit dans le trou borgne pour dévier un rayon laser (30).
